# EUROPEAN PATENT APPLICATION

(11) **EP 4 141 988 A1**
(43) Date of publication of application: **01.03.2023**
(21) Application number: 21792319.2
(22) Date of filing: 12.02.2021
(51) Int. Cl.: H01M 4/133, H01M 4/134, H01M 4/38, H01M 4/587, H01M 4/62, H01M 10/052, H01M 10/0562, H01M 10/0585

(54) **BATTERY**

(30) Priority: 24.04.2020 JP 2020077678
(71) Applicant: Panasonic Intellectual Property Management Co., Ltd., Osaka-shi, Osaka 540-6207 (JP)
(72) Inventor: MINEYA Kunihiko, Chuo-ku, Osaka-shi, Osaka 540-6207 (JP); MATSUMURA Tadaaki, Chuo-ku, Osaka-shi, Osaka 540-6207 (JP)
(74) Representative: Eisenführ Speiser
(86) International application number: PCT/JP2021/005349
(87) International publication number: WO 2021/215086

(57) **Abstract**

A battery 100 of the present disclosure includes a positive electrode 220, a negative electrode 210, and an electrolyte layer 13 located between the positive electrode 220 and the negative electrode 210. The negative electrode 210 includes a negative electrode current collector 12 and a negative electrode active material layer 11 located between the negative electrode current collector 12 and the electrolyte layer 13. The negative electrode active material layer 11 includes a first active material layer 150 and a second active material layer 160 located between the first active material layer 150 and the electrolyte layer 13. The first active material layer 150 contains, as a first active material 31, a material that forms an alloy with Li. The second active material layer 160 contains a second active material 32 and a solid electrolyte 33, and does not contain a material that forms an alloy with Li.

## Description

### TECHNICAL FIELD

The present disclosure relates to a battery.

### BACKGROUND ART

Carbon materials are the most common negative electrode active materials used in negative electrodes of batteries. In order to attain higher battery capacities, studies on the use of an alloying material such as silicon as a negative electrode active material are currently in progress.

Patent Literature 1 discloses an all-solid-state battery that uses a negative electrode active material layer formed of a mixed material containing: a solid electrolyte containing Li, P, and S; a carbon material as a negative electrode active material; and an alloying material as a negative electrode active material.

### CITATION LIST

### Patent Literature

Patent Literature 1: JP 2016-225187 A

### SUMMARY OF INVENTION

### Technical Problem

Conventionally, there has been a demand for a battery that achieves both a high energy density and safety.

### Solution to Problem

The present disclosure provides a battery including:
a positive electrode;
a negative electrode; and
a solid electrolyte layer located between the positive electrode and the negative electrode, wherein
the negative electrode includes a negative electrode current collector and a negative electrode active material layer located between the negative electrode current collector and the solid electrolyte layer;
the negative electrode active material layer includes a first active material layer and a second active material layer located between the first active material layer and the solid electrolyte layer,
the first active material layer contains, as a first active material, a material that forms an alloy with Li, and
the second active material layer contains a second active material and a solid electrolyte, and does not contain a material that forms an alloy with Li.

### Advantageous Effects of Invention

The present disclosure enables a battery to achieve both a high energy density and safety.

### BRIEF DESCRIPTION OF DRAWINGS

FIG. 1 is a cross-sectional view schematically showing the structure of a battery according to an embodiment.
FIG. 2 is a cross-sectional view showing the structure of a negative electrode in greater detail.
FIG. 3 is a cross-sectional view showing the structure of a negative electrode according to Modification 1.
FIG. 4 is a cross-sectional view showing the structure of a negative electrode according to Modification 2.
FIG. 5 is a cross-sectional view showing the structure of a negative electrode according to Modification 3.
FIG. 6 is a cross-sectional view showing the structure of a negative electrode according to Comparative Example 1.
FIG. 7 is a cross-sectional view showing the structure of a negative electrode according to Comparative Example 2.

### DESCRIPTION OF EMBODIMENTS

### (Findings on which the present disclosure is based)

When a negative electrode contains an alloying active material, the volume of the negative electrode varies greatly owing to expansion and contraction of the alloying active material accompanying lithium ion insertion and extraction reactions. When particles of the alloying active material are large, the particles of the alloying active material may penetrate through a solid electrolyte layer, which is an insulating layer, when they expand. This results in loss of battery function.

In particular, in a solid-state battery, a solid electrolyte layer and a negative electrode active material layer each have a dense structure. Accordingly, the solid-state battery has little space to allow for the expansion of the negative electrode active material. Thus, solid-state batteries suffer from more stringent restrictions as to the expansion of a negative electrode active material than batteries using a liquid electrolyte.

One possible solution to the above-described problem is to increase the thickness of the solid electrolyte layer as an insulating layer. However, since the solid electrolyte layer does not contribute to the energy density of the battery, increasing the thickness of the solid electrolyte layer reduces the energy density of the battery.

Thus, in a battery using an alloying active material, there is a trade-off between the energy density and safety. On this account, there has been a demand for a battery that achieves both a high energy density and safety.

### (Summary of one aspect of the present disclosure)

A battery according to a first aspect of the present disclosure is a battery including:
a positive electrode;
a negative electrode; and
a solid electrolyte layer located between the positive electrode and the negative electrode, wherein
the negative electrode includes a negative electrode current collector and a negative electrode active material layer located between the negative electrode current collector and the solid electrolyte layer;
the negative electrode active material layer includes a first active material layer and a second active material layer located between the first active material layer and the solid electrolyte layer,
the first active material layer contains, as a first active material, a material that forms an alloy with Li, and
the second active material layer contains a second active material and a solid electrolyte, and does not contain a material that forms an alloy with Li.

According to the first aspect, the second active material layer functions as a buffer layer between the first active material layer and the electrolyte layer. As a result, the first active material can be prevented from penetrating through the electrolyte layer even when it expands. In addition, since the first active material layer contains the material that forms an alloy with Li, the energy density of the battery is increased. Thus, the battery according to the present embodiment can achieve both a high energy density and safety.

In a second aspect of the present disclosure, for example, the battery according to the first aspect may be configured such that the second active material includes a carbon material. Carbon materials exhibit a relatively small expansion rate during charging. Thus, using a carbon material as the second active material can enhance the safety of the battery.

In a third aspect of the present disclosure, for example, the battery according to the second aspect may be configured such that the carbon material includes graphite. Graphite exhibits a smaller expansion rate than alloying active materials during a lithium ion insertion reaction, and thus is suitable as the second active material.

In a fourth aspect of the present disclosure, for example, the battery according to any one of the first to third aspects may be configured such that the first active material includes at least one selected from the group consisting of silicon, tin, and titanium. By using at least one of these materials as the first active material, the energy density of the battery can be increased.

In a fifth aspect of the present disclosure, for example, the battery according to any one of the first to fourth aspects may be configured such that the first active material layer is thinner than the second active material layer. This can further enhance the safety of the battery.

In a sixth aspect of the present disclosure, for example, the battery according to any one of the first to fifth aspects may be configured such that the first active material layer does not contain the second active material. This allows the first active material layer to have a sufficient discharge capacity.

In a seventh aspect of the present disclosure, for example, the battery according to the sixth aspect may be configured such that the first active material layer does not contain the solid electrolyte. This allows the first active material layer to have a sufficient discharge capacity.

In an eighth aspect of the present disclosure, for example, the battery according to any one of the first to seventh aspects may be configured such that the solid electrolyte has lithium ion conductivity. This can improve the lithium ion conductivity of the negative electrode active material layer.

Hereinafter, embodiments of the present disclosure will be described with reference to the drawings. It is to be noted, however, that the present disclosure is not limited to the following embodiments.

### (Embodiments)

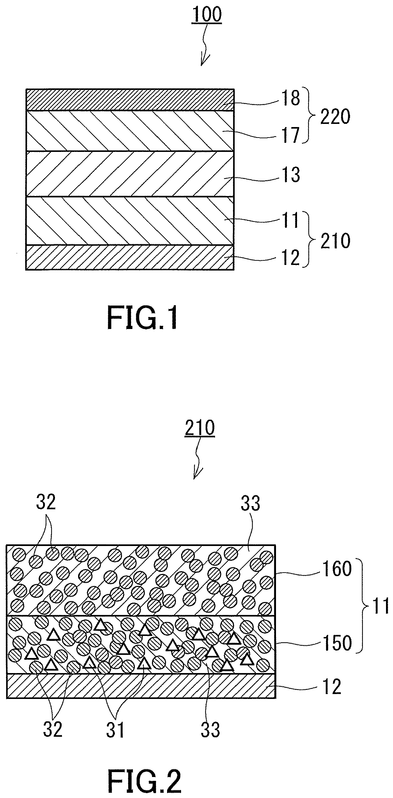

FIG. 1 is a cross-sectional view schematically showing the structure of a battery 100 according to an embodiment. The battery 100 includes a positive electrode 220, a negative electrode 210, and an electrolyte layer 13.

The positive electrode 220 includes a positive electrode active material layer 17 and a positive electrode current collector 18. The positive electrode active material layer 17 is disposed between the electrolyte layer 13 and the positive electrode current collector 18. The positive electrode active material layer 17 is in electrical contact with the positive electrode current collector 18.

The positive electrode current collector 18 is a member having a function of collecting electric power from the positive electrode active material layer 17. Examples of the material of the positive electrode current collector 18 include aluminum, aluminum alloys, stainless steel, copper, and nickel. The positive electrode current collector 18 may be made of aluminum or an aluminum alloy. The dimensions, shape, and the like of the positive electrode current collector 18 may be selected as appropriate depending on the intended use of the battery 100.

The positive electrode active material layer 17 contains a positive electrode active material and a solid electrolyte. The positive electrode active material may be a material having properties of occluding and releasing metal ions such as lithium ions. Examples of the positive electrode active material include lithium-containing transition metal oxides, transition metal fluorides, polyanion materials, fluorinated polyanion materials, transition metal sulfides, transition metal oxysulfides, and transition metal oxynitrides. In particular, when a lithium-containing transition metal oxide is used as the positive electrode active material, the battery can be produced at a low production cost and can have a high average discharge voltage.

The positive electrode active material may be a material containing Li and at least one element selected from the group consisting of Mn, Co, Ni, and Al. Examples of such a material include Li(NiCoAl)O₂, Li(NiCoMn)O₂, and LiCoO₂.

The positive electrode active material may be in the form of particles, for example. The shape of the particles of the positive electrode active material is not limited to particular shapes. The particles of the positive electrode active material may have an acicular shape, a spherical shape, an ellipsoidal shape, or a scale-like shape.

The particles of the positive electrode active material may have a median diameter of 0.1 µm or more and 100 µm or less. When the median diameter of the particles of the positive electrode active material is 0.1 µm or more, the positive electrode active material and the solid electrolyte can form a favorable dispersion state in the positive electrode 220. As a result, the charge and discharge characteristics of the battery 100 are improved. When the median diameter of the particles of the positive electrode active material is 100 µm or less, the lithium diffusion in the particles of the positive electrode active material becomes faster. This enables high power operation of the battery 100.

The solid electrolyte of the positive electrode 220 may be at least one selected from the group consisting of a sulfide solid electrolyte, an oxide solid electrolyte, a halide solid electrolyte, a polymer solid electrolyte, and a complex hydride solid electrolyte. Oxide solid electrolytes have excellent high-potential stability. When the battery 100 uses an oxide solid electrolyte, the battery 100 can exhibit further improved charge and discharge efficiency.

Regarding the volume ratio "v1 : 100 - v1" between the positive electrode active material and the first solid electrolyte in the positive electrode 220, 30 ≤ v1 ≤ 95 may be satisfied. When 30 ≤ v1 is satisfied, the battery 100 can have a sufficient energy density. When v1 ≤ 95 is satisfied, high power operation becomes possible.

The positive electrode 220 may have a thickness of 10 µm or more and 500 µm or less. When the thickness of the positive electrode 220 is 10 µm or more, the battery 100 can have a sufficient energy density. When the thickness of the positive electrode 220 is 500 µm or less, high power operation becomes possible.

When the solid electrolyte contained in the positive electrode 220 is in the form of particles (e.g., spherical), the median diameter of the group of particles of the solid electrolyte may be 100 µm or less. When the median diameter is 100 µm or less, the positive electrode active material and the solid electrolyte can form a favorable dispersion state in the positive electrode 220. This improves the charge and discharge characteristics of the battery 100.

The term "median diameter" as used in the present specification means a particle diameter when the cumulative volume in the volumetric particle size distribution is equal to 50%. The volumetric particle size distribution is measured using a laser diffraction measurement device or an image analysis device, for example.

The electrolyte layer 13 is located between the positive electrode 220 and the negative electrode 210. The electrolyte layer 13 is a layer containing an electrolyte. The electrolyte is, for example, a solid electrolyte. The electrolyte layer 13 may be a solid electrolyte layer.

The electrolyte layer 13 may contain, as a solid electrolyte, at least one selected from the group consisting of a halide solid electrolyte, a sulfide solid electrolyte, an oxide solid electrolyte, a polymer solid electrolyte, and a complex hydride solid electrolyte.

The electrolyte layer 13 may have a multilayer structure. In this case, the composition of the material of a layer that is in contact with the negative electrode 220 may be different from the composition of the material of a layer that is in contact with the positive electrode 220. The layer that is in contact with the negative electrode 220 may be formed of a sulfide solid electrolyte, which has high reduction resistance. The layer that is in contact with the positive electrode 220 may be formed of a halide solid electrolyte, which has high oxidation resistance.

The solid electrolyte contained in the electrolyte layer 13 may be in the form of particles, for example. The shape of the particles is not limited to particular shapes, and may be, for example, an acicular shape, a spherical shape, or an ellipsoidal shape.

The electrolyte layer 13 may have a thickness of 1 µm or more and 300 µm or less. When the thickness of the electrolyte layer 13 is 1 µm or more, the occurrence of a short circuit between the positive electrode 220 and the negative electrode 210 can be prevented reliably. When the thickness of the electrolyte layer 13 is 300 µm or less, high power operation can be achieved.

The negative electrode 210 includes a negative electrode active material layer 11 and a negative electrode current collector 12. The negative electrode active material layer 11 is disposed between the electrolyte layer 13 and the negative electrode current collector 12. The negative electrode active material layer 11 is in electrical contact with the negative electrode current collector 12.

The negative electrode current collector 12 is a member having a function of collecting electric power from the negative electrode active material layer 11. Examples of the material of the negative electrode current collector 12 include aluminum, aluminum alloys, stainless steel, copper, and nickel. The negative electrode current collector 12 may be made of nickel. The dimensions, shape, and the like of the negative electrode current collector 12 may be selected as appropriate depending on the intended use of the battery 100.

FIG. 2 is a cross-sectional view showing the structure of the negative electrode 210 in detail. The negative electrode active material layer 11 includes a first active material layer 150 and a second active material layer 160. The second active material layer 160 is located between the first active material layer 150 and the electrolyte layer 13. The first active material layer 150 contains, as a first active material 31, a material that forms an alloy with Li. The second active material layer 160 contains a second active material 32 and a solid electrolyte 33, and does not contain a material that forms an alloy with Li. The first active material 31 is concentrated in the vicinity of the negative electrode current collector 12.

When the negative electrode active material layer 11 is configured as above, the following effects can be obtained. Specifically, even if the first active material 31 contained in the first active material layer 150 expands during a lithium ion insertion reaction, the second active material layer 160, which does not contain a material that forms an alloy with Li, functions as a buffer layer between the first active material layer 150 and the electrolyte layer 13. As a result, the first active material 31 can be prevented from penetrating through the electrolyte layer 13 even when it expands. In addition, since the first active material layer 150 contains a material that forms an alloy with Li, the energy density of the battery 100 is increased. Thus, the battery according to the present embodiment can achieve both a high energy density and safety.

The expression that the layer "does not contain a material that forms an alloy with Li" means the material that forms an alloy with Li is not intentionally added thereto. For example, when the mass of the material that forms an alloy with Li is 1% or less with respect to the total mass of the active material contained in the second active material layer 160, it can be regarded that the material that forms an alloy with Li is not intentionally added to the second active material layer 160.

In the present embodiment, the first active material layer 150 is in contact with the negative electrode current collector 12. Note here that the first active material layer 150 may be spaced apart from the negative electrode current collector 12. Another layer may be provided between the first active material layer 150 and the negative electrode current collector 12. The first active material layer 150 is also in contact with the second active material layer 160. Note here that the first active material layer 150 may be spaced apart from the second active material layer 160. Another layer may be provided between the first active material layer 150 and the second active material layer 160. The second active material layer 160 is in contact with the electrolyte layer 13.

The first active material 31 and the second active material 32 both have properties of occluding and releasing lithium ions. The first active material 31 has a larger theoretical capacity (unit: mAh/g) than the second active material 32. The expansion rate (cubical expansion rate) of the first active material 31 during charging is greater than the expansion rate of the second active material 32 during charging.

The first active material 31 includes at least one selected from the group consisting of silicon, tin, and titanium. They are materials that form an alloy with Li, and they each have a higher theoretical capacity than carbon materials. By using at least one of these materials as the first active material 31, the energy density of the battery 100 can be increased. The material that forms an alloy with Li is typically a metal or a metalloid. The metal or the metalloid may be an elemental metal or an elemental metalloid. The material that forms an alloy with Li need not essentially be an elemental metal or an elemental metalloid. The material that forms an alloy with Li may be a compound containing an element that forms an alloy with Li. Such a compound may be a silicon oxide represented by SiOx (0 < x < 2) or a tin oxide represented by SnO or SnO₂.

The second active material 32 may be at least one selected from the group consisting of a carbon material, a metal material, an oxide, a nitride, a tin compound, a silicon compound, and a titanium compound, excluding materials that form an alloy with Li. A compound like LTO (Li₄Ti₅O₁₂) can be used as the second active material 32. Either an elemental metal or an alloy may be used as a metal material. Lithium metal may be used as a metal material. Examples of the carbon materials include graphite, coke, carbon undergoing graphitization, carbon fibers, spherical carbon, and amorphous carbon. Carbon materials exhibit a relatively small expansion rate during charging. Thus, using a carbon material as the second active material 32 can enhance the safety of the battery 100. The second active material 32 typically includes graphite. Graphite exhibits a smaller expansion rate than alloying active materials during a lithium ion insertion reaction, and thus is suitable as the second active material 32.

The term "alloying active material" means an active material that forms an alloy with lithium. The term "alloying material" means a material that forms an alloy with lithium.

The first active material 31 and the second active material 32 both may be in the form of particles. The particles of the first active material 31 and the particles of the second active material 32 may have a spherical shape, an ellipsoidal shape, a fibrous shape, or a scale-like shape.

In the present embodiment, the first active material layer 150 contains both the first active material 31 and the second active material 32. This can reduce the difference in expansion rate between the first active material layer 150 and the second active material layer 160 during charging and discharging. In the first active material layer 150, the ratio (M2/M1) of the mass M2 of the second active material 32 to the mass M1 of the first active material 31 is, for example, more than 0 and 20 or less. The mass M1 of the first active material 31 is the mass when neglecting elements (oxygen and the like) other than the element that forms an alloy with Li.

The solid electrolyte 33 is also contained in the first active material layer 150. This can improve the ionic conductivity of the first active material layer 150. The composition of the solid electrolyte contained in the first active material layer 150 may be the same as or different from the composition of the solid electrolyte contained in the second active material layer 160.

The second active material layer 160 may contain, as a negative electrode active material, only a material other than materials that form an alloy with Li. This can further enhance the safety of the battery 100.

The thickness of each of the first active material layer 150 and the second active material layer 160 is not limited to particular values. In the example illustrated in FIG. 2, the first active material layer 150 and the second active material layer 160 have the same thickness, for example. It should be noted that the first active material layer 150 may be thicker than the second active material layer 160. Alternatively, the first active material layer 150 may be thinner than the second active material layer 160.

The discharge capacity of each of the first active material layer 150 and the second active material layer 160 is not limited to particular values. The first active material layer 150 and the second active material layer 160 have the same discharge capacity, for example.

The solid electrolyte 33 has lithium ion conductivity. When the negative electrode active material layer 11 contains the solid electrolyte 33, the lithium ion conductivity of the negative electrode active material layer 11 can be improved.

The solid electrolyte 33 may be at least one selected from the group consisting of a sulfide solid electrolyte, an oxide solid electrolyte, a halide solid electrolyte, a polymer solid electrolyte, and a complex hydride solid electrolyte.

Examples of the sulfide solid electrolytes include Li₂S-P₂S₅, Li₂S-SiS₂, Li₂S-B₂S₃, Li₂S-GeS₂, Li_{3.25}Ge_{0.25}P_{0.75}S₄, and Li₁₀GeP₂S_{12.} LiX, Li₂O, MO_{q}, LiₚMO_{q}, or the like may be added thereto. The element X in "LiX" is at least one element selected from the group consisting of F, Cl, Br, and I. The element M in "MO_{q}" and "LiₚMO_{q}" is at least one element selected from the group consisting of P, Si, Ge, B, Al, Ga, In, Fe, and Zn. p and q in "MO_{q}" and "LiₚMO_{q}" are each independently a natural number.

Examples of the oxide solid electrolytes include: NASICON solid electrolytes typified by LiTi₂(PO₄)₃ and element-substituted products thereof; (LaLi)TiO₃-based perovskite solid electrolytes; LISICON solid electrolytes typified by Li₁₄ZnGe₄O₁₆, Li₄SiO₄, and LiGeO₄ and element-substituted products thereof; garnet solid electrolytes typified by Li₇La₃Zr₂O₁₂ and element-substituted products thereof; Li₃N and H-substituted products thereof; Li₃PO₄ and N-substituted products thereof; and glass and glass ceramics obtained by adding a material such as Li₂SO₄ or Li₂CO₃ to a base material containing a Li-B-O compound such as LiBO₂ or Li₃BO₃.

Examples of the polymer solid electrolytes include compounds composed of a polymer compound and a lithium salt. The polymer compound may have an ethylene oxide structure. Since the polymer compound with the ethylene oxide structure can contain a large amount of lithium salt, this can further improve the ionic conductance. Examples of the lithium salt include LiPF₆, LiBF₄, LiSbF₆, LiAsF₆, LiSOsCFs, LiN(SO₂CF₃)₂, LiN(SO₂C₂F₅)₂, LiN(SO₂CF₃)(SO₂C₄F₉), and LiC(SO₂CF₃)₃. As the lithium salt, one lithium salt selected from them may be used alone, or a mixture of two or more lithium salts selected from them may be used.

Examples of the complex hydride solid electrolytes include LiBH₄-LiI and LiBH₄-P2SS.

A halide solid electrolyte is a solid electrolyte containing a halogen. The halide solid electrolyte is represented by, for example, the following composition formula (1). In the composition formula (4), α, β, and γ are each independently a value greater than 0. M includes at least one element selected from the group consisting of a metalloid element and a metal element other than Li. X includes at least one selected from the group consisting of F, Cl, Br, and I.

Li_{α}M_{β}X_{γ} ... (1)

Metalloid elements include B, Si, Ge, As, Sb, and Te. Metal elements include: all elements included in Groups 1 to 12 of the periodic table, except for hydrogen; and all elements included in Groups 13 to 16 of the periodic table, except for B, Si, Ge, As, Sb, Te, C, N, P, O, S, and Se. Metal elements are a group of elements that can be cations when they form an inorganic compound with a halogen or with a halogen compound.

As the halide solid electrolyte, LisYXe, Li₂MgX₄, Li₂FeX₄, Li(Al, Ga, In)X₄, Li₃(Al, Ga, In)Xs, or the like can be used.

In the present disclosure, when an element in a formula is expressed as, e.g., "(Al, Ga, In)", it indicates at least one element selected from the group of elements in parentheses. That is, "(Al, Ga, In)" means the same as "at least one selected from the group consisting of Al, Ga, and In". The same applies to other elements. The halide solid electrolyte exhibits excellent ionic conductivity.

The solid electrolyte 33 may be an inorganic solid electrolyte. Inorganic solid electrolytes have excellent electrochemical stability and thus are suitable as the solid electrolyte 33. Examples of the inorganic solid electrolytes include sulfide solid electrolytes, oxide solid electrolytes, halide solid electrolytes, and complex hydride solid electrolytes, as described above. The solid electrolyte 33 may contain a sulfide solid electrolyte, or may consist of a sulfide solid electrolyte. Sulfide solid electrolytes have excellent reduction resistance and thus are suitable as a solid electrolyte to be used in the negative electrode active material layer 11. Moreover, sulfide solid electrolytes are highly flexible. Thus, when the negative electrode active material layer 11 contains a sulfide solid electrolyte, the effects of expansion and contraction of the alloying active material may be alleviated by the sulfide solid electrolyte.

The first active material 31 and the second active material 32 may each be in the form of particles. In the following, "particles of the negative electrode active material" means either one or both of the particles of the first active material 31 and the particles of the second active material 32.

The particles of the negative electrode active material may have a median diameter of 0.1 µm or more and 100 µm or less. When the median diameter of the particles of the negative electrode active material is 0.1 µm or more, the negative electrode active material and the solid electrolyte can form a favorable dispersion state in the negative electrode 210. This improves the charge and discharge characteristics of the battery 100. When the median diameter of the particles of the negative electrode active material is 100 µm or less, the lithium diffusion in the particles of the negative electrode active material becomes faster. This enables high power operation of the battery 100.

The median diameter of the particles of the negative electrode active material may be larger than the median diameter of the particles of the solid electrolyte 33 contained in the negative electrode 210. This allows the negative electrode active material and the solid electrolyte 33 to form a favorable dispersion state.

When the volume ratio between the negative electrode active material and the solid electrolyte 33 in the negative electrode 210 is expressed as "v2 : 100 - v2", the volume ratio v2 of the negative electrode active material may satisfy 30 ≤ v2 ≤ 95. When 30 ≤ v2 is satisfied, the battery 100 can have a sufficient energy density. When v2 ≤ 95 is satisfied, high power operation becomes possible.

The negative electrode 210 may have a thickness of 10 µm or more and 500 µm or less. When the thickness of the negative electrode 210 is 10 µm or more, the battery 100 can have a sufficient energy density. When the thickness of the negative electrode 210 is 500 µm or less, high power operation becomes possible.

For the purpose of facilitating lithium ion transfer to improve the output characteristics of the battery, at least one of the positive electrode active material layer 17, the electrolyte layer 13, and the negative electrode active material layer 11 may contain a nonaqueous electrolyte solution, a gel electrolyte, or an ionic liquid.

The nonaqueous electrolyte solution contains a nonaqueous solvent and a lithium salt dissolved in the nonaqueous solvent. Examples of the nonaqueous solvent include cyclic carbonate solvents, linear carbonate solvents, cyclic ether solvents, linear ether solvents, cyclic ester solvents, linear ester solvents, and fluorinated solvents. Examples of the cyclic carbonate solvents include ethylene carbonate, propylene carbonate, and butylene carbonate. Examples of the linear carbonate solvents include dimethyl carbonate, ethyl methyl carbonate, and diethyl carbonate. Examples of the cyclic ether solvents include tetrahydrofuran, 1,4-dioxane, and 1,3-dioxolane. Examples of the linear ether solvents include 1,2-dimethoxyethane and 1,2-diethoxyethane. Examples of the cyclic ester solvents include γ-butyrolactone. Examples of the linear ester solvents include methyl acetate. Examples of the fluorinated solvents include fluoroethylene carbonate, methyl fluoropropionate, fluorobenzene, fluoroethyl methyl carbonate, and fluorodimethylene carbonate. As the nonaqueous solvent, one nonaqueous solvent selected from the above-described nonaqueous solvents may be used alone, or a mixture of two or more nonaqueous solvents selected from the above-described nonaqueous solvents may be used. The nonaqueous electrolyte solution may contain at least one fluorinated solvent selected from the group consisting of fluoroethylene carbonate, methyl fluoropropionate, fluorobenzene, fluoroethyl methyl carbonate, and fluorodimethylene carbonate.

Examples of the lithium salt include LiPF₆, LiBF₄, LiSbF₆, LiAsF₆, LiSOsCFs, LiN(SO₂CF₃)₂, LiN(SO₂C₂F₅)₂, LiN(SO₂CF₃)(SO₂C₄F₉), and LiC(SO₂CF₃)₃. As the lithium salt, one lithium salt selected from them may be used alone, or a mixture of two or more lithium salts selected from them may be used. The concentration of the lithium salt may be, for example, in the range from 0.5 to 2 mol/L.

As the gel electrolyte, a polymer material impregnated with a nonaqueous electrolyte solution can be used. As the polymer material, at least one selected from the group consisting of polyethylene oxide, polyacrylonitrile, polyvinylidene fluoride, polymethyl methacrylate, and polymers with ethylene oxide bonds may be used.

Examples of cations constituting the ionic liquid include: aliphatic linear quaternary salts such as tetraalkylammonium and tetraalkylphosphonium; aliphatic cyclic ammoniums such as pyrrolidiniums, morpholiniums, imidazoliniums, tetrahydropyrimidiniums, piperaziniums, and piperidiniums; and nitrogen-containing heterocyclic aromatic cations such as pyridiniums and imidazoliums. Examples of anions constituting the ionic liquid include PF₆⁻, BF₄⁻, SbF₆⁻, AsF₆⁻, SO₃CF₃⁻, N(SO₂CF₃)₂⁻, N(SO₂C₂F₅)₂⁻, N(SO₂CF₃)(SO₂C₄F₉)⁻, and C(SO₂CF₃)₃⁻. The ionic liquid may contain a lithium salt.

At least one of the positive electrode active material layer 17, the electrolyte layer 13, and the negative electrode active material layer 11 may contain a binder for the purpose of improving the adhesion between particles. The binder is used to improve the binding properties of the materials constituting the electrodes. Examples of the binder include polyvinylidene fluoride, polytetrafluoroethylene, polyethylene, polypropylene, aramid resin, polyamide, polyimide, polyamide-imide, polyacrylonitrile, polyacrylic acid, poly(acrylic acid methyl ester), poly(acrylic acid ethyl ester), poly(acrylic acid hexyl ester), polymethacrylic acid, poly(methacrylic acid methyl ester), poly(methacrylic acid ethyl ester), poly(methacrylic acid hexyl ester), polyvinyl acetate, polyvinylpyrrolidone, polyether, polyether sulfone, hexafluoropolypropylene, styrene-butadiene rubber, and carboxymethyl cellulose. Also, the binder may be a copolymer of two or more materials selected from tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. The binder may be a mixture of two or more selected from these materials.

At least one of the positive electrode active material layer 17 and the negative electrode active material layer 11 may contain a conductive additive for the purpose of improving the electronic conductivity. Examples of the conductive additive include: graphite such as natural graphite and artificial graphite; carbon blacks such as acetylene black and Ketjen black; conductive fibers such as carbon fibers and metal fibers; carbon fluoride; metal powders such as aluminum powder; conductive whiskers such as zinc oxide whiskers and potassium titanate whiskers; conductive metal oxides such as titanium oxide; and conductive polymer compounds such as polyaniline, polypyrrole, and polythiophene. Cost reduction can be achieved by using a carbon conductive additive.

When the battery 100 of the present embodiment is an all-solid-state battery, none of the electrolyte solution, the gel electrolyte, and the ionic liquid is included in the battery 100.

The battery 100 of the present embodiment can be embodied as batteries with various shapes, including a coin battery, a cylindrical battery, a prismatic battery, a sheet-like battery, a button battery, a flat-type battery, and a stacked battery.

The negative electrode active material layer 11 may be formed by either a wet method or a dry method, or may be formed using a wet method and a dry method in combination. In a wet method, a slurry containing raw materials is applied onto the negative electrode current collector 12. In a dry method, raw material powders are subjected to compression molding together with the negative electrode current collector 12. The positive electrode active material layer 17 can also be formed by these methods.

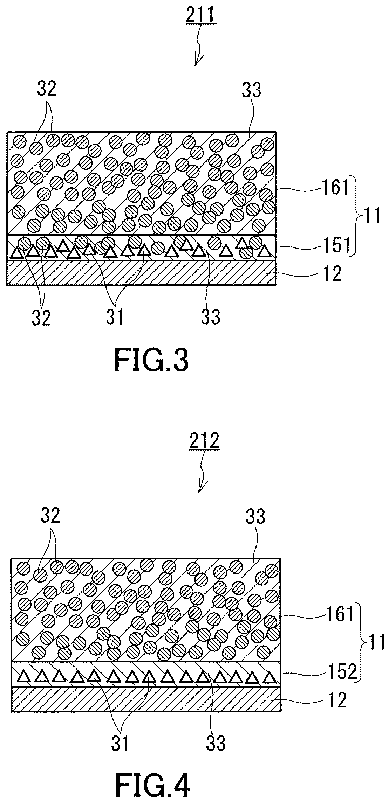

FIG. 3 is a cross-sectional view showing the structure of a negative electrode 211 according to Modification 1. A negative electrode active material layer 11 includes a first active material layer 151 and a second active material layer 161. The first active material layer 151 is thinner than the second active material layer 161. Such a structure can further enhance the safety of the battery 100. In one example, the ratio T1/T2 is in the range from 1/2 to 1/20, where T1 is the thickness of the first active material layer 151 and T2 is the thickness of the second active material layer 161.

The thickness of each of these layers may be the average value of thicknesses measured at freely-selected points on a cross-section including the center of gravity when the battery 100 is viewed in plan view.

Materials contained in the first active material layer 151 and materials contained in the second active material layer 161 are as described above with reference to FIG. 2.

FIG. 4 is a cross-sectional view showing the structure of a negative electrode 212 according to Modification 2. A negative electrode active material layer 11 includes a first active material layer 152 and a second active material layer 161. The first active material layer 152 does not contain a second active material 32. The first active material layer 152 may contain, as a negative electrode active material, only a first active material 31. According to such a structure, the first active material layer 152 can have a sufficient discharge capacity. This contributes to an improvement in the energy density of the battery 100.

The expression that the layer "does not contain a second active material 32" means the second active material 32 is not intentionally added thereto.

Also in the present modification, the first active material layer 152 is thinner than the second active material layer 161. The negative electrode 212 thus achieves an excellent balance between the energy density and safety.

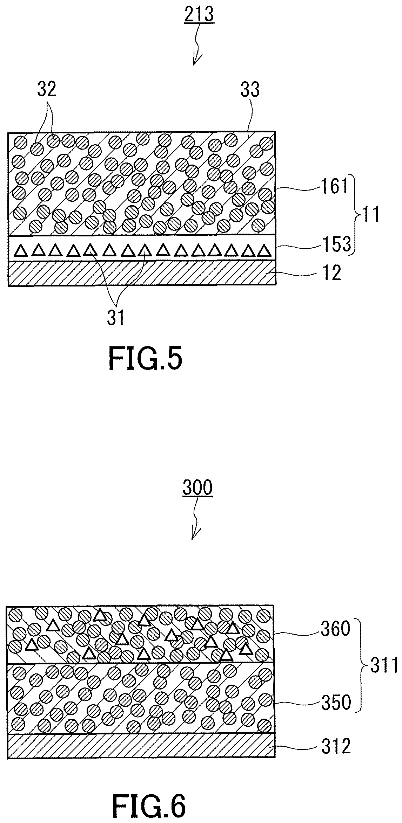

FIG. 5 is a cross-sectional view showing the structure of a negative electrode 213 according to Modification 3. A negative electrode active material layer 11 includes a first active material layer 153 and a second active material layer 161. The first active material layer 153 contains a first active material 31 and does not contain a solid electrolyte 33. The first active material layer 152 may contain, as a negative electrode active material, only the first active material 31. According to such a structure, the first active material layer 153 can have a sufficient discharge capacity. This contributes to an improvement in the energy density of the battery 100.

In the present modification, the first active material layer 153 may be formed by applying an alloying active material on a surface of a negative electrode current collector 12 by a dry method. Examples of the dry method include vapor deposition and sputtering.

The expression that the layer "does not contain a solid electrolyte 33" means the solid electrolyte 33 is not intentionally added thereto.

Also in the present modification, the first active material layer 153 is thinner than the second active material layer 161. The negative electrode 213 thus achieves an excellent balance between the energy density and safety.

### EXAMPLES

The present disclosure will be described in detail below with reference to examples and comparative examples.

### [Production of Sulfide Solid Electrolyte]

In an Ar atmosphere glove box with a dew point of -60°C or less, Li₂S and P₂S₅ were weighed such that they were at a molar ratio of Li₂S : P₂S₅ = 75 : 25. They were pulverized and mixed together in a mortar to obtain a mixture. Thereafter, the mixture was subjected to a milling process at 510 rpm for 10 hours using a planetary ball mill (Type P-7, manufactured by Fritsch GmbH). As a result, a glassy solid electrolyte was obtained. The glassy solid electrolyte was heat-treated in an inert atmosphere at 270°C for 2 hours. As a result, a powder of a glass-ceramic-like sulfide solid electrolyte Li₂S-P₂S₅ was obtained.

### <Example 1>

### [Production of Material A1 for Forming First Active Material Layer]

In an Ar atmosphere glove box with a dew point of -60°C or less, graphite and Si were mixed together in a mortar at a mass ratio of 4 : 1 to obtain a mixture. Thereafter, the mixture of the graphite and Si was mixed with the sulfide solid electrolyte at a mass ratio of 7 : 3. A material A1 was thus obtained. The graphite and Si were both in the form of powder.

### [Production of Material B1 for Forming Second Active Material Layer]

In an Ar atmosphere glove box with a dew point of -60°C or less, graphite and the sulfide solid electrolyte were mixed together at a mass ratio of 7 : 3. A material B1 was thus obtained.

### [Production of Secondary Battery]

The following process was performed using the material A1, the material B1, the solid sulfide electrolyte, and a copper foil (thickness: 12 µm).

First, 3 mg of the sulfide solid electrolyte, 5 mg of the material B1, and 5 mg of the material A1 were stacked in this order in an insulating outer cylinder. They were pressure-molded at a pressure of 360 MPa, whereby a stack composed of a negative electrode active material layer and an electrolyte layer was obtained.

Subsequently, the copper foil was stacked on the layer of the material A1. They were pressure-molded at a pressure of 360 MPa, whereby a stack composed of a negative electrode current collector, the negative electrode active material layer, and the electrolyte layer was obtained.

Next, metallic In (thickness: 200 µm), metallic Li (thickness: 300 µm), and metallic In (thickness: 200 µm) were stacked on the electrolyte layer in this order. They were pressure-molded at a pressure of 80 MPa, whereby a stack composed of a positive electrode, the electrolyte layer, and a negative electrode was obtained.

Next, current collectors made of stainless steel were placed on the top and the bottom of the stack, and current collector leads were attached to the current collectors.

Finally, the insulating outer cylinder was sealed with an insulating ferrule to shield the interior of the insulating outer cylinder from the outside atmosphere. Thus, a battery of Example 1 was produced. The negative electrode of the battery of Example 1 had the structure described above with reference to FIG. 2.

### <Example 2>

### [Production of Material A2 for Forming First Active Material Layer]

In an Ar atmosphere glove box with a dew point of -60°C or less, graphite and Si were mixed together in a mortar at a mass ratio of 1 : 1 to obtain a mixture. Thereafter, the mixture of the graphite and Si was mixed with the sulfide solid electrolyte at a mass ratio of 7 : 3. A material A2 was thus obtained.

### [Production of Material B2 for Forming Second Active Material Layer]

In an Ar atmosphere glove box with a dew point of -60°C or less, graphite and the sulfide solid electrolyte were mixed together at a mass ratio of 7 : 3. A material B2 was thus obtained.

### [Production of Secondary Battery]

A battery of Example 2 was produced in the same manner as in Example 1, except that 8 mg of the material B2 was used instead of 5 mg of the material B1 and 2 mg of the material A2 was used instead of 5 mg of the material A1. A negative electrode of the battery of Example 2 had the structure described above with reference to FIG. 3.

### <Example 3>

### [Production of Material A3 for Forming First Active Material Layer]

In an Ar atmosphere glove box with a dew point of -60°C or less, Si and the sulfide solid electrolyte were mixed together at a mass ratio of 7 : 3. A material A3 was thus obtained.

### [Production of Material B3 for Forming Second Active Material Layer]

In an Ar atmosphere glove box with a dew point of -60°C or less, graphite and the sulfide solid electrolyte were mixed together at a mass ratio of 7 : 3. A material B3 was thus obtained.

### [Production of Secondary Battery]

A battery of Example 3 was produced in the same manner as in Example 1, except that 9 mg of the material B3 was used instead of 5 mg of the material B1 and 1 mg of the material A3 was used instead of 5 mg of the material A1. A negative electrode of the battery of Example 3 had the structure described above with reference to FIG. 4.

### <Example 4>

### [Production of Material A4 for Forming First Active Material Layer]

In an Ar atmosphere glove box with a dew point of -60°C or less, only Si was prepared as a material A4.

### [Production of Material B4 for Forming Second Active Material Layer]

In an Ar atmosphere glove box with a dew point of -60°C or less, graphite and the sulfide solid electrolyte were mixed together at a mass ratio of 7 : 3. A material B4 was thus obtained.

### [Production of Secondary Battery]

A battery of Example 4 was produced in the same manner as in Example 1, except that 9 mg of the material B4 was used instead of 5 mg of the material B1 and 1 mg of the material A4 was used instead of 5 mg of the material A1. A negative electrode of the battery of Example 4 had the structure described above with reference to FIG. 5.

### <Comparative Example 1>

### [Production of Material a1 for Forming First Active Material Layer]

In an Ar atmosphere glove box with a dew point of -60°C or less, graphite and the sulfide solid electrolyte were mixed together at a mass ratio of 7 : 3. A material a1 was thus obtained.

### [Production of Material b1 for Forming Second Active Material Layer]

In an Ar atmosphere glove box with a dew point of -60°C or less, graphite and Si were mixed together in a mortar at a mass ratio of 4 : 1 to obtain a mixture. Thereafter, the mixture of the graphite and Si was mixed with the sulfide solid electrolyte at a mass ratio of 7 : 3. A material b1 was thus obtained.

### [Production of Secondary Battery]

A battery of Comparative Example 1 was produced in the same manner as in Example 1, except that 5 mg of the material b1 was used instead of 5 mg of the material B1 and 5 mg of the material a1 was used instead of 5 mg of the material A1.

FIG. 6 is a cross-sectional view showing the structure of a negative electrode 300 of the battery according to Comparative Example 1. The negative electrode 300 includes a negative electrode current collector 312 and a negative electrode active material layer 311. The negative electrode active material layer 311 includes a first active material layer 350 and a second active material layer 360. The negative electrode current collector 312, the first active material layer 350, and the second active material layer 360 are stacked in this order. The first active material layer 350 contains only graphite as a negative electrode active material. The second active material layer 360 contains graphite and Si as negative electrode active materials.

### <Comparative Example 2>

### [Production of Material c1 for Forming Negative Electrode Active Material Layer]

In an Ar atmosphere glove box with a dew point of -60°C or less, graphite and Si were mixed together in a mortar at a mass ratio of 9 : 1 to obtain a mixture. Thereafter, the mixture of the graphite and Si was mixed with the sulfide solid electrolyte at a mass ratio of 7 : 3. A material c1 was thus obtained.

### [Production of Secondary Battery]

A battery of Comparative Example 2 was produced in the same manner as in Example 1, except that 10 mg of the material c1 was used instead of 5 mg of the material B1 and 5 mg of the material A1.

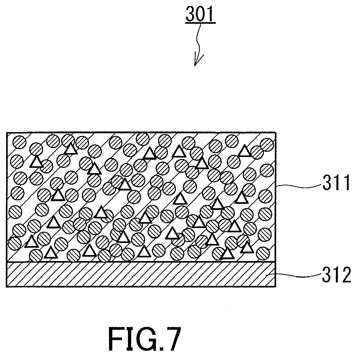

FIG. 7 is a cross-sectional view showing the structure of a negative electrode 301 of the battery according to Comparative Example 2. The negative electrode 301 includes a negative electrode current collector 312 and a negative electrode active material layer 311. The negative electrode active material layer 311 is provided on the negative electrode current collector 312. The negative electrode active material layer 311 contains graphite and Si as negative electrode active materials. The graphite and Si are uniformly distributed in the negative electrode active material layer 311.

### [Charge and Discharge Test]

Ten batteries according to each of Examples 1 to 4 and Comparative Examples 1 and 2 were prepared, and each of the batteries was subjected to a charge-discharge test conducted under the following conditions. The batteries according to the examples and the batteries according to the comparative examples had the same theoretical capacity.

### The battery was placed in a thermostatic chamber at 25°C.

The battery was charged with a constant current of 380 µA corresponding to 0.05 C rate (20-hour rate) with respect to the theoretical capacity of the battery, and the charging was terminated when the voltage reached -0.62 V.

Next, the battery was discharged with a constant current of 380 µA corresponding to 0.05 C rate (20-hour rate), and the discharging was terminated when the voltage reached 1.9 V.

In this manner, the initial discharge capacities of the 10 cells according to each of Examples 1 to 4 and Comparative Examples 1 and 2 were measured. The average value of the initial discharge capacities was calculated to determine the average initial discharge capacity, and the ratio of the average initial discharge capacity to the theoretical capacity was calculated. The results obtained are shown in Table 1. Some of the batteries of Comparative Examples 1 and 2 lost their functions during the charging. Table 1 also shows the number of batteries that lost their functions.

**[Table 1]**

| | Ex. 1 | Ex. 2 | Ex. 3 | Ex. 4 | Comp. Ex. 1 | Comp. Ex. 2 |
|---|---|---|---|---|---|---|
| Initial average discharge capacity/ theoretical capacity (%) | 100 | 100 | 100 | 100 | 100 | 100 |
| The number of internal short circuits (out of 10 batteries) | 0 | 0 | 0 | 0 | 3 | 2 |

### <Discussion>

As can be seen from Table 1, the batteries according to the examples and the comparative examples all exhibited expected theoretical capacities. These results demonstrate that the arrangement of the alloying active material Si does not affect the discharge capacity.

None of the batteries of Examples 1 to 4 lost their functions during the charging. The reason for this is considered to be that Si having a large expansion rate was concentrated in the vicinity of the negative electrode current collector and the alloying active material was not present in the vicinity of the electrolyte layer. Since the second active material layer not containing the alloying active material was present between the electrolyte layer and the first active material layer containing the alloying active material and this second active material layer functioned as a buffer, the alloying active material was prevented from penetrating through the electrolyte layer even when it expanded, whereby the charge and discharge of the battery proceeded in a normal manner.

In contrast, some of the batteries of Comparative Examples 1 and 2 lost their functions during the charging. In the batteries of the comparative examples, the alloying active material Si was present in the vicinity of the electrolyte layer. It is thus presumed that, when lithium ions were inserted to Si during the charging, the alloying active material expanded and penetrated through the electrolyte layer, thereby causing an internal short circuit with the lithium indium alloy as the positive electrode active material.

### INDUSTRIAL APPLICABILITY

The battery of the present disclosure can be utilized as, for example, an all-solid-state lithium secondary battery.

## Claims

1. A battery comprising:
a positive electrode;
a negative electrode; and
a solid electrolyte layer located between the positive electrode and the negative electrode, wherein
the negative electrode comprises a negative electrode current collector and a negative electrode active material layer located between the negative electrode current collector and the solid electrolyte layer;
the negative electrode active material layer comprises a first active material layer and a second active material layer located between the first active material layer and the solid electrolyte layer,
the first active material layer comprises, as a first active material, a material that forms an alloy with Li, and
the second active material layer comprises a second active material and a solid electrolyte, and does not comprise a material that forms an alloy with Li.

2. The battery according to claim 1, wherein
the second active material comprises a carbon material.

3. The battery according to claim 2, wherein
the carbon material comprises graphite.

4. The battery according to any one of claims 1 to 3, wherein
the first active material comprises at least one selected from the group consisting of silicon, tin, and titanium.

5. The battery according to any one of claims 1 to 4, wherein
the first active material layer is thinner than the second active material layer.

6. The battery according to any one of claims 1 to 5, wherein
the first active material layer does not comprise the second active material.

7. The battery according to claim 6, wherein
the first active material layer does not comprise the solid electrolyte.

8. The battery according to any one of claims 1 to 7, wherein
the solid electrolyte has lithium ion conductivity.
